# EUROPÄISCHE PATENTANMELDUNG

(11) **EP 2 889 547 A1**
(43) Veröffentlichungstag der Anmeldung: **01.07.2015**
(21) Anmeldenummer: 14199043.2
(22) Anmeldetag: 18.12.2014
(51) Int. Cl.: F24H 8/00, F24D 12/02, F28D 9/00

(54) **Warmerückgewinnungseinheit**

(30) Priorität: 31.12.2013 TR 201315684
(71) Anmelder: Bosch Termoteknik Sanayi Ve Ticaret A.S., 45030 Manisa (TR)
(72) Erfinder: Demirci, Alper, Izmir (TR); Yilmaz, Umut, Izmir (TR); Cetin Gurbuz, Gökce, Izmir (TR); Altay, Hürrem Murat, Izmir (TR); Ozboga, Halil Ufuk, Manisa (TR); Yilmaz, Turgut Oruç, Izmir (TR)
(74) Vertreter: Iskender, Ibrahim

(57) **Zusammenfassung**

Die Erfindung betrifft im Allgemeinen Wärmerückgewinnungseinheiten, die Wärmetauscher für die Wärmerückgewinnung aus Abgas umfassen, und Heizgeräte, die diese Wärmerückgewinnungseinheiten beinhalten.

## Beschreibung

### Technisches Gebiet

Die Erfindung betrifft im Allgemeinen Wärmerückgewinnungseinheiten, die Wärmetauscher für die Wärmerückgewinnung aus Abgas umfassen, und Heizgeräte, die diese beinhalten.

### Allgemeiner Stand der Technik

Heutzutage werden Heizgeräte zur Bereitstellung von Trinkwarmwasser und zur Raumheizung verwendet. In den genannten Heizgeräten wird ein Brennstoff verbrannt, damit ein Heißgas entsteht, das durch oder um einen Wärmetauscher herum fließt und dabei einen Teil seiner Wärmeenergie an ein Nutzmedium (Trinkwasser und/oder Heizungswasser) abgibt. Bei dieser Art von Heizgeräten weist das Abgas, das in die Atmosphäre abgegeben wird, immer noch eine Restwärme auf. Die Erfindung hat die Aufgabe, eine Wärmerückgewinnungseinheit mit möglichst kleinen Abmessungen zu bilden, die die Wärme dieses Gases, das in die Atmosphäre abgegeben wird, nutzt.

In der Patentanmeldung EP2236947 wird ein Heizgerät offenbart, das einen zusätzlichen Wärmetauscher enthält, der einen ersten Fluidfließweg, der mit dem Abgasauslass verbunden ist, einen zweiten Fluidfließweg für Wasser und einen tertiären Wärmetauscher mit einem dritten Fluidfließweg für Wasser, Flüssigkeit oder Gas enthält. Bei der Erfindung befindet sich der erste Fluidfließweg mit dem zweiten Fluidfließweg und dem dritten Fluidfließweg im Wärmeaustausch.

Für die Aufgabe des Wärmetauschs werden im Stand der Technik beispielsweise lange Spiralrohre verwendet. Die genannten Rohre werden lang konstruiert, um eine ausreichende Wärmerückgewinnung zu gewährleisten. Daher nehmen die Wärmetauscher sehr viel Platz ein. Im Allgemeinen sind die offenbarten Produkte auf dem Heizgerät angeordnet. Aufgrund ihrer großen Abmessungen können sie jedoch nicht richtig befestigt werden. Die genannten Rückgewinnungseinheiten benötigen für die Wandbefestigung zusätzliche Vorrichtungen. Die genannten zusätzlichen Vorrichtungen gewährleisten keine sichere Befestigung bzw. können sich im Laufe der Zeit lockern. Dementsprechend müssen die Wärmerückgewinnungseinheiten des Stands der Technik meistens an die anderen Teile, mit denen sie im Heizgerät in Wechselwirkung stehen, angepasst werden, was zur Entstehung von zusätzlichen Kosten führt. Beispielsweise muss infolge des Drucks, der auf der Gasseite entsteht, das Widerstandgebläse im Gerät ausgewechselt und ein leistungsfähigeres Modell verwendet werden.

### Kurzdarstellung der Erfindung

Dahingegen besteht die Wärmerückgewinnungseinheit, die Gegenstand der vorliegenden Erfindung ist, aus einem speziell konstruierten Innengehäuse und Wärmetauscherplatten, die in diesem Gehäuse schräg angeordnet sind, sodass sie zum Gehäuse passen. Da die genannten Wärmetauscherplatten kleiner als bei den anderen offenbarten Systemen sind, können sie leicht in das Heizsystem integriert werden und nehmen auch außerhalb des Heizgerätes nicht zu viel Platz ein.

Um die Nachteile des Stands der Technik zu beseitigen, ist die Hauptaufgabe der Erfindung, zu gewährleisten, dass sich das Wasser, das auf den Plattenoberflächen des Wärmetauschers kondensiert, und das Abgas, das um den Wärmetauscher strömt, in die gleiche Richtung (von oben nach unten) bewegen. Dies gelingt, weil aufgrund des Entwurfes des genannten Systems der Wärmetauscher im Innengehäuse schräg angeordnet sind. Auf diese Weise wird der Druckabfall im Abgasweg gesenkt und gewährleistet, dass das kondensierte Wasser durch die Schwerkraft problemlos aus dem System fließt. Einhergehend damit wird das Risiko, dass der Abgasweg frühzeitig verstopft, auf ein Minimum reduziert.

Im Zusammenhang damit ist eine weitere Aufgabe der Erfindung, den Druckabfall des Abgases im Innengehäuse auf ein Mindestmaß zu reduzieren und den leichten Betrieb des Gebläses im Heizgerät zu ermöglichen, sodass kein stärkeres Gebläse für das Heizgerät erforderlich ist.

Eine weitere Aufgabe der Erfindung ist, mithilfe des Fischgrätenmusters und diagonalen Musters, das sich auf den Plattenoberflächen befindet, und den Teilen, die an den Wasserein- und -austrittbereichen angeordnet sind, den maximalen Wärmetransfer zwischen Abgas und Wasser zu gewährleisten und mit dem genannten Muster einen größeren Wärmetransfer auf einer kleineren Fläche zu realisieren.

Eine weitere Aufgabe der Erfindung ist, einen Wärmetauscher zu schaffen, der im Vergleich zu den offenbarten Plattenwärmetauschern des Stands der Technik in Bezug auf Gewicht, Abmessung und Volumen weniger Platz einnimmt und keine zusätzliche Vorrichtung, wie eine Wandbefestigung, zur Verbindung mit dem System benötigt.

Die Erfindung betrifft eine Wärmerückgewinnungseinheit, insbesondere für einen Wärmeaustausch zwischen Abgas und Wasser bei einem Heizgerät. Die genannte Wärmerückgewinnungseinheit ist dadurch gekennzeichnet, dass sie ein Innengehäuse umfasst, das mindestens ein hinteres Fixierelement und mindestens ein unteres Fixierelement sowie optional mindestens ein vorderes Fixierelement aufweist, wobei die Fixierelemente einen Hohlraum als Teilraum des Innengehäuses zumindest teilweise begrenzen, und wobei das untere Fixierelement in Einbaulage der Wärmerückgewinnungseinheit in einem Winkel im Bereich 5° bis 45° zur Horizontalen angeordnet ist. Ein Winkel von 15° kann beispielsweise einen guten Kompromiss zwischen nötigem Gefälle zur Ableitung des Kondenswassers unter Nutzung der Schwerkraft und hierfür erforderlicher Bauhöhe darstellen und ist besonders bevorzugt. Das Innengehäuse enthält mindestens einen Wärmetauscher, der in dem Hohlraum, den die oben genannten Fixierelemente im genannten Innengehäuse begrenzen, dem genannten Winkel entsprechend schräg zum Gehäuse angeordnet ist. Dieser Hohlraum kann quaderförmig ausgebildet sein.

Der Wärmeaustausch findet bei der erfindungsgemäßen Wärmerückgewinnungseinheit zwischen Abgas und Wasser statt. Dabei entsteht das Abgas in einer Verbrennung eines Brennstoffs (wie Öl, Gas oder Feststoff) mit Luft in einem Brenner. Das heiße Abgas tritt zunächst in einen Primärwärmetauscher ein und wird dort gekühlt, zumeist im Austausch mit Trinkwasser, Kesselwasser und/oder Heizungswasser als wärmeaufnehmendes Medium (aber auch Luft kann als wärmeaufnehmendes Medium Verwendung finden). Das wärmeaufnehmende Medium transportiert die Wärme direkt oder unter nochmaligem Wärmetausch zum Ort ihrer Nutzung. Nach Austritt aus dem Primärwärmetauscher enthält das Abgas noch Restwärme. Diese wird in der Wärmerückgewinnungseinheit zurück gewonnen, indem sie zumindest teilweise auf ein wärmeaufnehmendes Medium übertragen wird. Dieses Medium kann wieder Trinkwasser, Kesselwasser, Heizungswasser und/oder Luft sein. Die Fixierelemente dienen dem Positionieren und/oder Fixieren des Wärmetauschers im Innengehäuse der Wärmerückgewinnungseinheit und können am oder im Innengehäuse beispielsweise als Anschlagleiste, Vorsprung, Auflagefläche oder Winkel mit oder ohne formschlüssiger oder kraftschlüssiger Fixierhilfe ausgebildet sein. Die Fixierelemente dienen gegebenenfalls zusammen mit Teilbereichen der inneren Oberflächen des Innengehäuses dem Halten des Wärmetauschers in allen drei Raumrichtungen. Hierfür bilden die Fixierelemente und gegebenenfalls die genannten Teilbereiche der inneren Oberflächen des Innengehäuses zumindest teilweise die Ecken und/oder Kanten und/oder Seitenflächen eines Hohlraums, der der Aufnahme des Wärmetauschers dient. Dieser Hohlraum ist mindestens teilweise gegenüber angrenzenden Teilräumen des Innengehäuses, in Form von Zu- und Ableitungen, Diffusoren und Konfusoren, Vorkammern und Nachkammern, Bypässen und so weiter, offen, so dass Abgas in diesen Hohlraum und in den Wärmetauscher einströmen sowie aus diesem Hohlraum und aus dem Wärmetauscher ausströmen kann. In Einbaulage, das heißt bei Anordnung der Wärmerückgewinnungseinheit in Verwendungsposition in oder an einem Heizgerät, stehen mindestens eines der Fixierelemente (beispielsweise das untere Fixierelement), der Hohlraum und der Wärmetauscher in einem Neigungswinkel von beispielsweise 15° zur Waagerechten, so dass am Wärmetauscher anfallendes Kondensat in Richtung des durch den Wärmetauscher hindurchströmenden Abgases abfließen und austreten kann.

Ein Ausführungsbeispiel der erfindungsgemäßen Wärmerückgewinnungseinheit ist dadurch gekennzeichnet, dass das Innengehäuse eine Einleitungsöffnung zum Einleiten eines Abgases in das Innengehäuse sowie eine Ausleitungsöffnung zum Ausleiten des Abgases aus dem Innengehäuse aufweist. Ferner kann das Innengehäuse auch Öffnungen zum Einführen und Ausführen eines wärmeaufnehmenden Mediums, zum Ableiten eines Kondenswassers, sowie gegebenenfalls Reinigungs- bzw. Inspektionsöffnungen aufweisen.

Eine geeignete Ausführung der Erfindung ist dadurch gekennzeichnet, dass das Innengehäuse und/oder der Wärmetauscher Dichtelemente aufweisen, wobei die Dichtelemente geeignet sind, eine Strömung des Abgases am Wärmetauscher vorbei, beispielsweise durch einen Spalt zwischen Innengehäuse und Wärmetauscher oder zwischen Innengehäuse und Fixierelement, zumindest teilweise zu unterbinden. Diese Dichtwirkung kann entstehen durch Sperren oder Ablenken einer Strömung. Die Dichtelemente können flächig oder linear aus weichem oder hartem Material ausgebildet sein.

Eine weitere geeignete Ausführung ist dadurch gekennzeichnet, dass das Innengehäuse ein Gehäusehauptteil und mindestens ein separates Seitenteil umfasst, und dass die Fixierelemente zumindest teilweise einstückig mit dem Gehäusehauptteil und/oder dem Seitenteil ausgebildet sind. Somit übernehmen die Fixierelemente zumindest teilweise die Funktion eines Dichtelements, indem zwischen einer inneren Wandoberfläche des Innengehäuses und den Fixierelementen kein Spalt vorhanden ist und hier kein Abgas strömen kann. Umfasst das Innengehäuse nur ein Seitenteil, so ist das Gehäusehauptteil in der Regel mit einer umfänglichen Wandung sowie mit einer dem Seitenteil gegenüber angeordneten Seitenwandung ausgebildet.

Bei einer vorzugsweisen Ausführung der Erfindung enthält das Innengehäuse ein Ventil, das in dem Bereich angeordnet ist, in dem das Abgas das Innengehäuse verlässt, und das aufgrund seiner Gestaltung und Anordnung geeignet ist, je nach Ventilstellung ein Abgas durch den Wärmetauscher oder am Wärmetauscher vorbei zu leiten.

Bei einer vorzugsweisen Ausführung der Erfindung enthält das genannte Innengehäuse stromaufwärts des Wärmetauschers einen Strömungsvergleichmäßiger zum gleichmäßigen Verteilen des Abgases auf einen Eintrittsquerschnitt des Wärmetauschers.

Eine weitere Ausführung der Wärmerückgewinnungseinheit ist dadurch gekennzeichnet, dass der Strömungsvergleichmäßiger einen dem strömenden Abgas zur Verfügung stehenden Strömungsquerschnitt stromaufwärts des Wärmetauschers überspannt, wobei der Strömungsvergleichmäßiger die Form eines rinnenartig gebogenen Blattes aufweist und eine Mehrzahl an Öffnungen zum gleichmäßigen Verteilen des Abgases aufweist. Dabei kann der Strömungsvergleichmäßiger von der Seite gesehen nach außen gebogen sein.

Bei einer vorzugsweisen Ausführung der Erfindung ist der Wärmetauscher ein Plattenwärmetauscher, insbesondere ein Gas-Flüssigkeit-Plattenwärmetauscher mit einer Mehrzahl an untereinander strömungsverbundenen ersten Strömungsräumen für Abgas und einer Mehrzahl an untereinander strömungsverbundenen zweiten Strömungsräumen für das wärmeaufnehmende Medium. Der Plattenwärmetauscher kann quaderförmig ausgebildet sein. Damit passt er in einen quaderförmigen Hohlraum im Inneren des Innengehäuses.

In Einbaulage der Wärmerückgewinnungseinheit, das heißt bei Anordnung der Wärmerückgewinnungseinheit in Verwendungsposition in oder auf einem Heizgerät, stehen die Platten des Wärmetauschers in einem Neigungswinkel von beispielsweise 15° zur Waagerechten, so dass auf den Platten des Wärmetauschers anfallendes Kondensat in Richtung des durch den Wärmetauscher hindurchströmenden Abgases abfließen und austreten kann.

Eine Ausführung der Wärmerückgewinnungseinheit ist dadurch gekennzeichnet, dass der Plattenwärmetauscher einen Stapel aus mehreren Platten umfasst, wobei zumindest eine erste Platte und/oder eine letzte Platte ein Dichtelement in Form einer Dichtkante zum Abdichten einer Strömung des Abgases am Wärmetauscher vorbei, beispielsweise durch einen Spalt zwischen Wärmetauscher und Innengehäuse, aufweisen.

Eine geeignete Ausführung der Erfindung ist dadurch gekennzeichnet, dass zumindest die erste Platte und/oder die letzte Platte einen außen umlaufenden Randbereich umfassen, wobei die Dichtkante mindestens einen im Randbereich auswärts gebogenen Teilbereich aufweist.

Alternativ kann die Dichtkante auch eine Weichstoff-Dichtung aufweisen, die gegen das Innengehäuse dichtet.

Eine weitere geeignete Ausführung der Wärmerückgewinnungseinheit ist dadurch gekennzeichnet, dass der Plattenwärmetauscher eine Mehrzahl an Platten umfasst, wobei zumindest einige der Platten des Wärmetauschers ein Prägemuster in Form von Fischgräten aufweisen.

Bei einer erfindungsgemäßen Ausführung umfasst die Wärmerückgewinnungseinheit ein Außengehäuse, das das Innengehäuse zumindest teilweise umgibt, wobei das Außengehäuse eine Einleitungsöffnung zum Einleiten von Luft in das Außengehäuse sowie eine Ausleitungsöffnung zum Ausleiten von Luft aus dem Außengehäuse aufweist, und das gewährleistet, dass das Innengehäuse im Betrieb äußerlich von dieser Luft umströmt ist.

Die Erfindung betrifft ferner ein Heizgerät, welches eine erfindungsgemäße Wärmerückgewinnungseinheit enthält, wobei die Wärmerückgewinnungseinheit auf dem oberen Bereich des Heizgerätes angeordnet oder im Heizgerät integriert ist. Diese Anordnung bzw. Integration entspricht der Einbaulage der Wärmerückgewinnungseinheit, sofern das Heizgerät ordnungsgemäß aufgestellt bzw. aufgehängt ist.

Eine Ausführung des Heizgeräts ist dadurch gekennzeichnet, dass das Heizgerät einen Brenner mit einer Eintrittsöffnung für ein Brennstoff-Luft-Gemisch und einer Austrittsöffnung für ein Abgas umfasst, dass die Ausleitungsöffnung des Außengehäuses mit der Eintrittsöffnung des Brenners in Strömungsverbindung steht, und dass die Austrittsöffnung des Brenners mit der Einleitungsöffnung des Innengehäuses in Strömungsverbindung steht.

### Erläuterung der Figuren

Es zeigt
- Figur 1: eine Explosionszeichnung einer erfindungsgemäßen Wärmerückgewinnungseinheit.
- Figur 2a: Seitlicher Querschnitt der erfindungsgemäßen Wärmerückgewinnungseinheit ohne Wärmetauscher.
- Figur 2b: Perspektivischer seitlicher Querschnitt der erfindungsgemäßen Wärmerückgewinnungseinheit ohne Wärmetauscher.
- Figur 2c: Perspektivische Detailansicht des Strömungsvergleichmäßigers in der erfindungsgemäßen Wärmerückgewinnungseinheit.
- Figur 3a: Allgemeine Seitenansicht des Ventils in der Einheit.
- Figur 3b: Draufsicht des Ventils in der Einheit.
- Figur 4: Allgemeine Ansicht der erfindungsgemäßen Wärmerückgewinnungseinheit in montiertem Zustand.
- Figur 5: ein Abschnitt eines Innengehäuses mit einem Abschnitt eines Wärmetauschers
- Figur 6: ein Wärmetauscher mit Dichtelement.

### Referenznummern

- 10: Wärmerückgewinnungseinheit
- 11: Innengehäuse
- 111: Strömungsvergleichmäßiger
- 1111: Öffnung
- 112: Unteres Fixierelement
- 113: Vorderes Fixierelement
- 114: Hinteres Fixierelement
- 12: Außengehäuse
- 121: Dichtung
- 13: Seitenteil
- 131: Dichtung
- 14: Gehäusehauptteil
- 15: Dichtelement
- 20: Wärmetauscher
- 201: Platte
- 21: Anschlussteil
- 211: Dichtung
- 22: Rohr
- 221: Anschlusselement
- 30: Ventil

### Detaillierte Beschreibung der Erfindung

In dieser detaillierten Beschreibung wird die erfindungsgegenständliche Wärmerückgewinnungseinheit (10) zum besseren Verständnis des Themas und ohne einschränkende Wirkung erläutert.

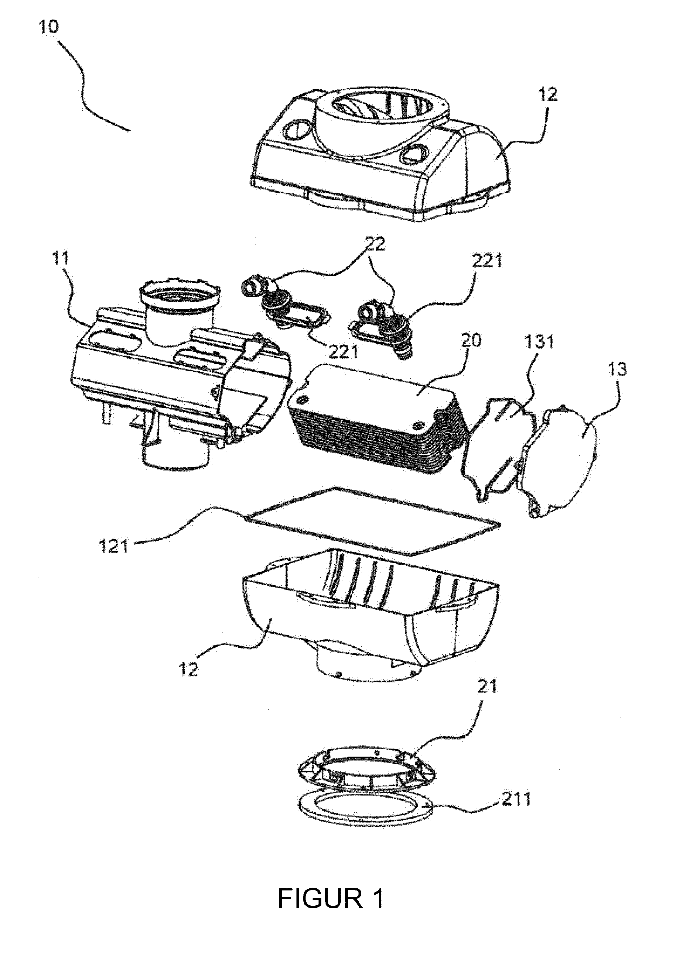

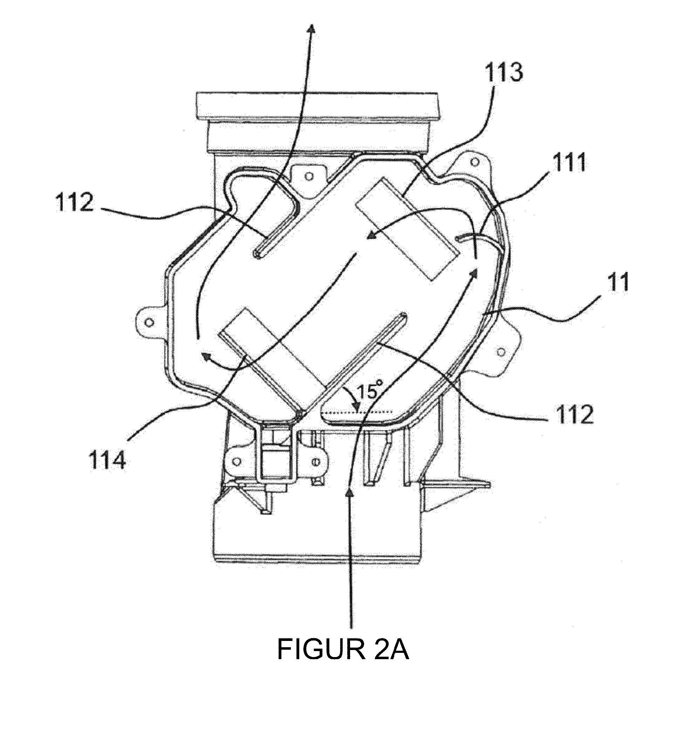

Bezug nehmend auf Figur 1 besteht die erfindungsgegenständliche Wärmerückgewinnungseinheit (10) grundsätzlich aus einem Innengehäuse (11), einem Außengehäuse (12) und einem Wärmetauscher (20), hier als Plattenwärmetauscher dargestellt. Das genannte Innengehäuse (11) ist winkelig konstruiert, um zu gewährleisten, dass das Abgas, nachdem es von unten nach oben in die Einheit (10) eingedrungen ist, wieder nach unten (im Wärmetauscher in der gleichen Flussrichtung mit der kondensierten Flüssigkeit) und anschließend wieder nach oben, nach draußen geleitet wird. Kurz gesagt, das Abgas folgt in der Einheit (10) einem s-förmigen Weg. Dieser Weg ist auch in Figur 2a dargestellt.

Das Innengehäuse (11) weist (in Einbaulage unten) eine stutzenförmige Einleitungsöffnung zum Einleiten eines Abgases in das Innengehäuse sowie (in Einbaulage oben) eine stutzenförmige Ausleitungsöffnung zum Ausleiten des Abgases aus dem Innengehäuse auf.

In der Wärmerückgewinnungseinheit (10) befindet sich mindestens ein Seitenteil (Deckel) (13), das das genannte Innengehäuse (11) seitlich verschließt. In dem Bereich, in dem das Seitenteil (13) mit dem Gehäusehauptteil des Innengehäuses (11) verbunden ist, ist eine Dichtung (131) angeordnet, um eine Undichtigkeit zu verhindern.

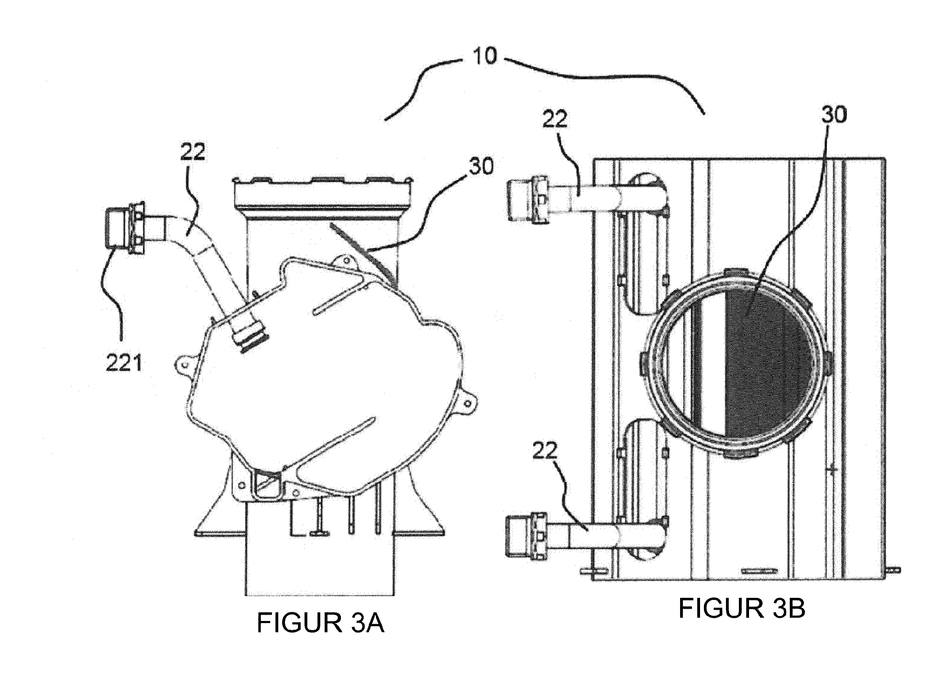

Bezug nehmend auf Figur 3a befindet sich im Innengehäuse (11) ein Ventil (30). Das genannte Ventil (30) ist im Innengehäuse (11) in Form eines kleinen Deckels in der Nähe des Bereichs angeordnet, in dem das Abgas das Innengehäuse (11) verlässt. Das Ventil (30) funktioniert in der Einheit (10) folgendermaßen: Wenn am Trinkwarmwasser-Heizungskombigerät der Befehl eingeht, dass Trinkwarmwasser benötigt wird, wechselt das Ventil (30) in eine geschlossene Stellung und gewährleistet, dass das Abgas zum Plattenwärmetauscher (20) geleitet wird. Wenn am Kombiheizgerät der Befehl eingeht, dass die Umgebung (beispielsweise ein zu beheizender Raum) geheizt werden soll, wechselt das Ventil in die geöffnete Stellung (Figur 3b) und lenkt das Abgas direkt zum Schornsteinanschluss, ohne es über den Plattenwärmetauscher (20) zu leiten. Infolgedessen wird die Widerstandswirkung, die der Plattenwärmetauscher (20) erzeugt, gesenkt und es wird gewährleistet, dass der Heizkreis mit der definierten maximalen Leistung arbeitet.

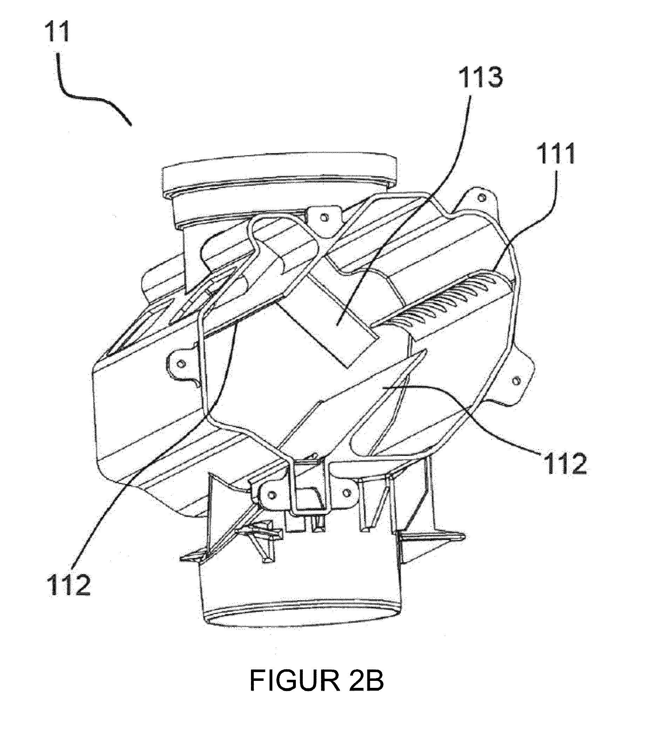

Im Innengehäuse (11) befindet sich ein hinteres Fixierelement (114) und ein vorderes Fixierelement (113), die einander gegenüberliegend und deren untere Verbindungslinie in Einbaulage der Wärmerückgewinnungseinheit in einem 15-Grad-Winkel (Winkelbereich 5° bis 45°) zur Horizontalen angeordnet sind (s. Figur 2a und 2b). Darüber hinaus befindet sich in dem Bereich zwischen den genannten Fixierelementen (113, 114) mindestens ein unteres Fixierelement (112), das im Wesentlichen senkrecht zu den Fixierelementen (113, 114) angeordnet ist. Die Fixierelemente begrenzen innerhalb des Innengehäuses einen quaderförmigen Hohlraum (Teilraum des Innengehäuses).

Das Außengehäuse (12) ist so konstruiert, dass es den direkten Kontakt des Innengehäuses (11) mit der Umgebung unterbindet und das Innengehäuse (11) umfasst. Das genannte Außengehäuse (12) besteht aus zwei getrennten Teilen (12, Figur 1). Zwischen den Teilen des Außengehäuses (12) ist eine Dichtung (121) angeordnet, um eine Undichtigkeit zu verhindern. Das Außengehäuse weist eine stutzenförmige Einleitungsöffnung zum Einleiten von Luft in das Außengehäuse sowie eine stutzenförmige Ausleitungsöffnung zum Ausleiten von Luft aus dem Außengehäuse auf.

Im Innengehäuse (11) befindet sich ein Plattenwärmetauscher (20), der in dem Hohlraum angeordnet ist, den die genannten Fixierelemente (112, 113, 114) bilden. Der genannte Plattenwärmetauscher (20) ist im gleichen Winkel wie das untere Fixierelement (112) schräg angeordnet, um den Abgasfluss zu gewährleisten. Die genannte Wärmerückgewinnung wird mithilfe des Plattenwärmetauschers (20) gewährleistet, der im Innengehäuse (11) angeordnet ist. Die spezielle geometrische Struktur des Innengehäuses (11) gewährleistet, dass das Abgas in der Einheit (10) effektiv zirkuliert und der Plattenwärmetauscher (20) die Wärme, die mit dem Abgas aus dem Heizgerät ausgeleitet wird, von neuem nutzt. Dementsprechend weisen die Platten (201), aus denen der Plattenwärmetauscher (20) besteht, ein Fischgrätenmuster auf, wodurch sie die Oberfläche vergrößern und den effektiveren Wärmetransfer ermöglichen. Infolgedessen gewährleistet ein Wärmetauscher (20) mit minimalen Abmessungen einen maximalen Wärmetransfer.

Der Plattenwärmetauscher ist aus einer Mehrzahl von Wärmetauscherplatten aufgebaut, von denen jeweils zwei aufeinander folgende Platten zu einer Wassertasche verbunden sind. Die mehreren Wassertaschen sind fluidisch miteinander verbunden und bilden den Wasser-Strömungsraum. Jeweils zwischen zwei Wassertaschen sind Freiräume ausgebildet, die den Strömungsraum für das Abgas bilden.

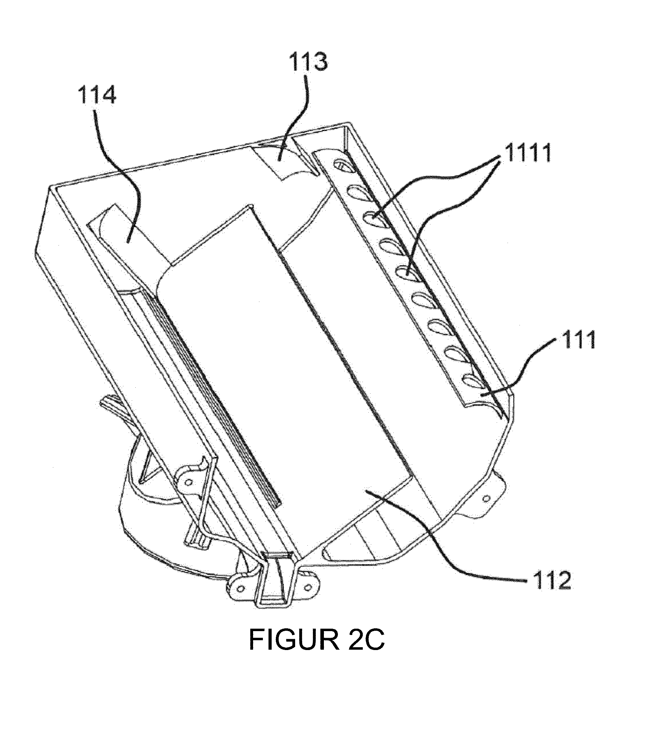

Bezug nehmend auf Figur 2c befindet sich an der oberen Seitenwand des Innengehäuses (11) mindestens ein Strömungsvergleichmäßiger (111), der sich über die ganze Länge erstreckt. Der genannte Strömungsvergleichmäßiger (111) ist so konstruiert, dass er das Abgas gleichmäßig auf einen luftseitigen Eintrittsquerschnitt des Wärmetauschers verteilt und eine ausreichende homogene Verteilung des Abgases in der Einheit (10) gewährleistet. Der Strömungsvergleichmäßiger überspannt den stromaufwärts des Wärmetauschers dem Abgas zur Verfügung stehenden Strömungsquerschnitt, und weist die Form eines rinnenartig gebogenen Blattes auf. Diese Konstruktion ist im Querschnitt von der Seite gesehen vorzugsweise nach außen gebogen. In dem genannten Strömungsvergleichmäßiger (111) sind Öffnungen (1111) eingelassen und das Abgas wird homogen im Wärmetauscher (20) verteilt, indem es durch die genannten Öffnungen (1111) geleitet wird.

Wie in Figur 1 zu sehen ist, enthält das Außengehäuse (12) ein Anschlussteil (21), um die Befestigung an dem Heizgerät (in der Figur nicht abgebildet) zu gewährleisten. Das genannte Anschlussteil (21) ist so angeordnet, dass es sich in der senkrechten Achse unter dem Außengehäuse (12) und zwischen Heizgerät (in der Figur nicht abgebildet) und Außengehäuse (12) befindet. Zwischen Anschlussteil (21) und Heizgerät (in der Figur nicht abgebildet) ist eine Dichtung (211) angeordnet, um etwaige Undichtigkeiten zu verhindern.

Der Wassereintritt und -austritt in die Wärmerückgewinnungseinheit (10) erfolgt mithilfe von Rohren (22). Die genannten Rohre (22) bestehen vorzugsweise aus Kupfer, um einen effektiven Wärmeübergang zu gewährleisten. Für den Anschluss des Rohrs (22) an die Wärmerückgewinnungseinheit (10) wird mindestens eine Dichtung (221) verwendet.

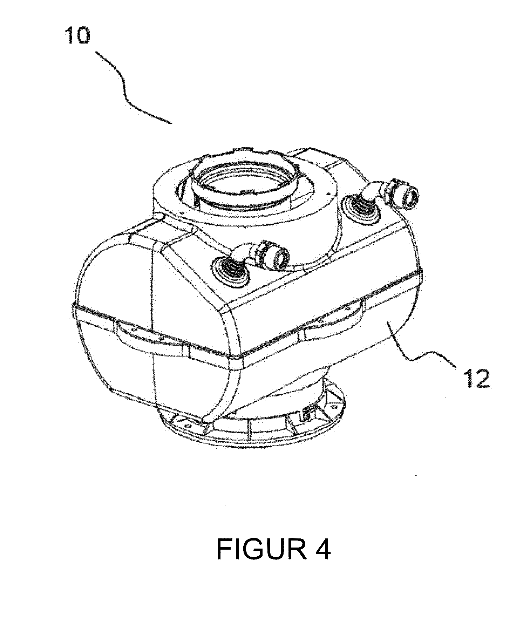

Die Wärmerückgewinnungseinheiten (10) des Stands der Technik werden mit dem Heizgerät separat verbunden oder als Zubehör im Heizgerät angeordnet. Die betreffende Erfindung ermöglicht jedoch, dass die genannten Wärmerückgewinnungseinheiten (10) als internes Modul in das System integriert werden können und/oder später als Zubehör mit alten Heizgeräten verbunden werden. Wenn sie als Zubehör verbunden werden, müssen sie ein Außengehäuse (12) wie in Figur 4 enthalten. Das genannte Außengehäuse (12) umgibt das Innengehäuse (11) und gewährleistet, dass die saubere Luft in das Heizgerät aufgenommen wird.

Der Plattenwärmetauscher (20) nimmt das Wasser aus einer Versorgungsleitung mithilfe eines einzigen Eintrittrohrs (22) auf. Das Wasser, das aus der genannten Leitung kommt, fließt vor dem Wasserzulauf des Gerätes (auf der Figur nicht abgebildet) in den Plattenwärmetauscher (20).

Die Einheit (10) funktioniert in einem Kombiheizgerät integriert grundsätzlich folgendermaßen. Wenn warmes Trinkwasser benötigt wird, tritt das im Heizgerät vorhandene Abgas von unten über die Einleitungsöffnung in die Wärmerückgewinnungseinheit (10), genauer in ds Innengehäuse, ein. Mithilfe des Plattenwärmetauschers (20) wird dem Abgas die vorhandene Wärmeenergie entzogen. Über die Ausleitungsöffnung verlässt das Abgas die Wärmerückgewinnungseinheit.

Die zurückgewonnene Wärmeenergie wird durch Kupferrohre (22) zum Kaltwasser geleitet, das in die Einheit (10) eintritt und in dem Plattenwärmetauscher (20) zirkuliert. Das Abgas, das vom Austritt der Hauptheizzelle des Heizgerätes (in der Figur nicht abgebildet) ausgestoßen wird, tritt über das Abgasrohr (22), das danach angeordnet ist, in das Innengehäuse (11) ein. Das Abgas strömt durch die Abgas-Strömungsräume (in der Figur nicht abgebildet) des Plattenwärmetauschers (20), wobei der hohe Anteil an Wasserdampf, der sich darin befindet, kondensiert. Aufgrund des Wärmeübergangs zwischen dem Abgas, dem kondensierenden Wasserdampf und dem Plattenwärmetauscher (20) steigt die Temperatur des Wassers im Plattenwärmetauscher (20) an und die Temperatur des Abgases sinkt. Das genannte Verfahren ist ein Vorheizverfahren.

Nach dem genannten Vorheizverfahren fließt das erwärmte Wasser mit einer höheren Temperatur in das Heizgerät (in der Figur nicht abgebildet) als in die Wärmerückgewinnungseinheit (10). Infolgedessen benötigt das Heizgerät weniger Wärme und weniger Gas, um die eingestellte Temperatur zu erreichen, und es wird eine Effizienzsteigerung durch Ersparnis gewährleistet.

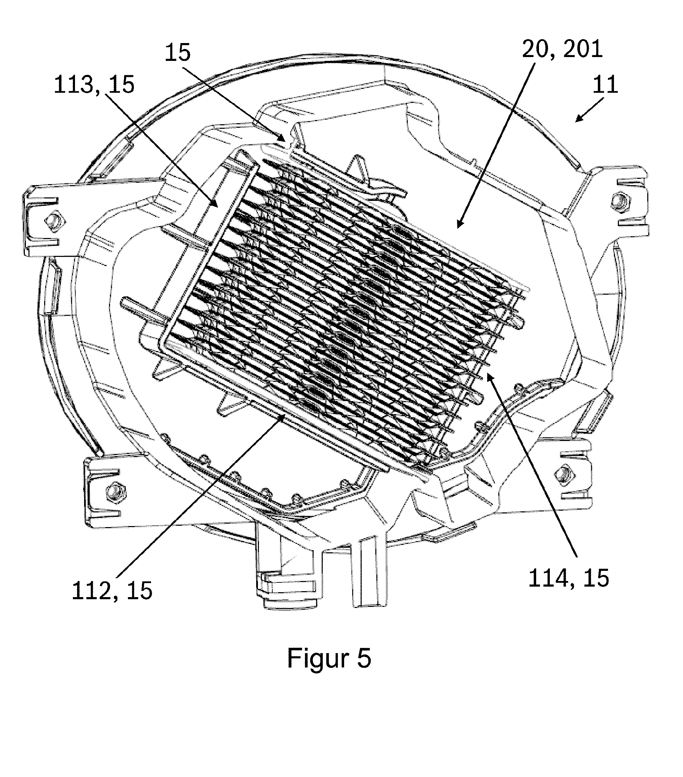

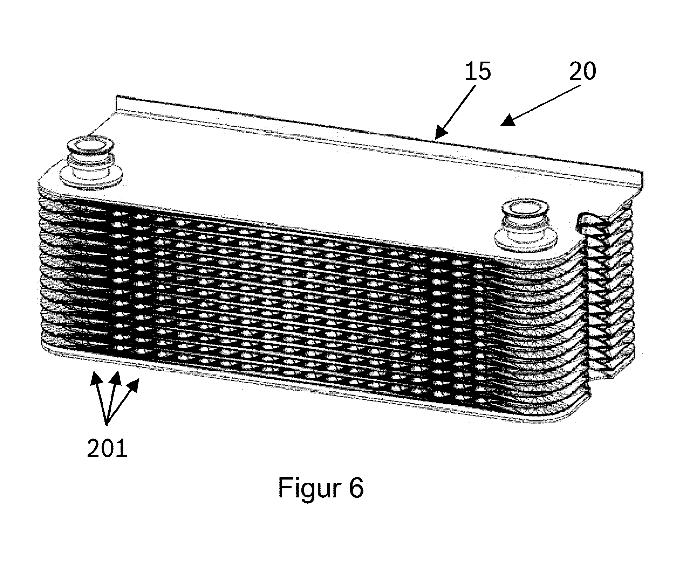

Figur 5 zeigt einen Abschnitt des Gehäusehauptteils des Innengehäuses (11) sowie einen Abschnitt des Plattenwärmetauschers (20) mit den aufeinander gestapelten Platten (201). Die umfängliche Wandung des Gehäusehauptteils und der Plattenwärmetauscher (20) sind verkürzt dargestellt, während die hier ellipsenförmig dargestellte Seitenwandung des Gehäusehauptteils komplett dargestellt ist. Die Fixierelemente (112, 113, 114) sind zumindest teilweise einstückig mit der Seitenwandung des Gehäusehauptteils ausgebildet und bilden selbst Dichtelemente (15), die ein Ausweichen der Abgasströmung in den Spalt zwischen Wärmetauscher (20) und Innengehäuse (11) unterbinden. Ein weiteres Dichtelement (15) ist an der oben dargestellten Ecke des Plattenwärmetauschers zu erkennen, und zwar als von der ersten Wärmetauscherplatte rechtwinklig abstehende Dichtkante (15), wie dies in Figur 6 detailliert gezeigt ist. Auch diese Dichtkante (15) unterbindet eine Strömung des Abgases am Wärmetauscher (20) vorbei.

Figur 6 zeigt einen Plattenwärmetauscher (20) einer erfindungsgemäßen Wärmerückgewinnungseinheit (10). Hier weist der Wärmetauscher (20) ein Dichtelement (15) auf, wobei das Dichtelement geeignet ist, eine Strömung des Abgases am Wärmetauscher (20) vorbei, z.B. durch einen Spalt zwischen Innengehäuse (11) und Wärmetauscher (20), zumindest teilweise zu unterbinden. Der Plattenwärmetauscher umfasst einen Stapel aus mehreren Platten (201). Die obere, erste Platte und/oder die untere, letzte Platte weisen eine Dichtkante (15) zum Abdichten einer Strömung des Abgases am Wärmetauscher (20) vorbei auf. Dazu umfasst zumindest die obere, erste Platte und/oder die untere, letzte Platte einen außen umlaufenden Randbereich, wobei die Dichtkante (15) mindestens einen im Randbereich auswärts gebogenen Teilbereich aufweist. Dieser auswärts gebogene Teilbereich ist geeignet, einen Spalt zwischen Wärmetauscher (20) und Innengehäuse (11) zu versperren, und gewährleistet, dass das Abgas nicht durch den Spalt am Wärmetauscher vorbei, sondern durch den Wärmetauscher strömt, und so die Wärmerückgewinnung möglichst effizient ist.

## Patentansprüche

1. Wärmerückgewinnungseinheit (10), insbesondere für einen Wärmeaustausch zwischen einem Abgas und einem wärmeaufnehmendem Medium bei einem Heizgerät, **dadurch gekennzeichnet, dass**
- die Wärmerückgewinnungseinheit (10) ein Innengehäuse (11) umfasst, wobei das Innengehäuse (11) mindestens ein hinteres Fixierelement (114) und mindestens ein unteres Fixierelement (112) sowie optional mindestens ein vorderes Fixierelement (113) aufweist, wobei die Fixierelemente (112, 113, 114) einen Hohlraum als Teilraum des Innengehäuses begrenzen, und wobei das untere Fixierelement (112) in Einbaulage der Wärmerückgewinnungseinheit (10) in einem Winkel im Bereich 5° bis 45° zur Horizontalen angeordnet ist,
- wobei das Innengehäuse (11) mindestens einen Wärmetauscher (20) enthält, der in dem Hohlraum, den die oben genannten Fixierelemente (112, 113, 114) im genannten Innengehäuse (11) bilden, dem genannten Winkel entsprechend schräg zum Gehäuse angeordnet ist.

2. Wärmerückgewinnungseinheit (10) nach Anspruch 1, **dadurch gekennzeichnet, dass** das Innengehäuse eine Einleitungsöffnung zum Einleiten eines Abgases in das Innengehäuse sowie eine Ausleitungsöffnung zum Ausleiten des Abgases aus dem Innengehäuse aufweist.

3. Wärmerückgewinnungseinheit (10) nach Anspruch 1 oder 2, **dadurch gekennzeichnet, dass** das Innengehäuse (11) und/oder der Wärmetauscher (20) Dichtelemente (15) aufweisen, wobei die Dichtelemente (15) geeignet sind, eine Strömung des Abgases am Wärmetauscher (20) vorbei zumindest teilweise zu unterbinden.

4. Wärmerückgewinnungseinheit (10) nach einem der vorhergehenden Ansprüche, **dadurch gekennzeichnet, dass** das Innengehäuse (11) ein Gehäusehauptteil und mindestens ein Seitenteil (13) umfasst, und dass die Fixierelemente (112, 113, 114) zumindest teilweise einstückig mit dem Gehäusehauptteil und/oder dem Seitenteil (13) ausgebildet sind.

5. Wärmerückgewinnungseinheit (10) nach einem der vorhergehenden Ansprüche, **dadurch gekennzeichnet, dass** das Innengehäuse (11) ein Ventil (30) enthält, das in dem Bereich angeordnet ist, in dem das Abgas das Innengehäuse (11) verlässt, und das aufgrund seiner Gestaltung und Anordnung geeignet ist, je nach Ventilstellung ein Abgas durch den Wärmetauscher oder am Wärmetauscher vorbei zu leiten.

6. Wärmerückgewinnungseinheit (10) nach einem der vorhergehenden Ansprüche, **dadurch gekennzeichnet, dass** das genannte Innengehäuse stromaufwärts des Wärmetauschers (10) einen Strömungsvergleichmäßiger (111) zum gleichmäßigen Verteilen des Abgases auf einen Eintrittsquerschnitt des Wärmetauschers enthält.

7. Wärmerückgewinnungseinheit (10) nach einem der vorhergehenden Ansprüche, **dadurch gekennzeichnet, dass** der Strömungsvergleichmäßiger (111) einen dem strömenden Abgas zur Verfügung stehenden Strömungsquerschnitt stromaufwärts des Wärmetauschers überspannt, wobei der Strömungsvergleichmäßiger die Form eines rinnenartig gebogenen Blattes aufweist und eine Mehrzahl an Öffnungen zum gleichmäßigen Verteilen des Abgases aufweist.

8. Wärmerückgewinnungseinheit (10) nach einem der vorhergehenden Ansprüche, **dadurch gekennzeichnet, dass** der Wärmetauscher (20) ein Plattenwärmetauscher ist, insbesondere ein Gas-Flüssigkeit-Plattenwärmetauscher mit einer Mehrzahl an untereinander strömungsverbundenen ersten Strömungsräumen für Abgas und einer Mehrzahl an untereinander strömungsverbundenen zweiten Strömungsräumen für ein wärmeaufnehmendes Medium.

9. Wärmerückgewinnungseinheit (10) nach Anspruch 8, **dadurch gekennzeichnet, dass** der Plattenwärmetauscher einen Stapel aus mehreren Platten umfasst, wobei zumindest eine erste Platte und/oder eine letzte Platte ein Dichtelement (15) in Form einer Dichtkante zum Abdichten einer Strömung des Abgases am Wärmetauscher (20) vorbei aufweisen.

10. Wärmerückgewinnungseinheit (10) nach Anspruch 9, **dadurch gekennzeichnet, dass** zumindest die erste Platte und/oder die letzte Platte einen außen umlaufenden Randbereich umfassen, wobei die Dichtkante mindestens einen im Randbereich auswärts gebogenen Teilbereich aufweist.

11. Wärmerückgewinnungseinheit (10) nach einem der Ansprüche 8 bis 10, **dadurch gekennzeichnet, dass** der Plattenwärmetauscher eine Mehrzahl an Platten umfasst, wobei zumindest einige der Platten des Wärmetauschers (20) ein Prägemuster in Form von Fischgräten aufweisen.

12. Wärmerückgewinnungseinheit (10) nach einem der vorhergehenden Ansprüche, **dadurch gekennzeichnet, dass** sie ein Außengehäuse (12) umfasst, das das Innengehäuse (11) zumindest teilweise umgibt, wobei das Außengehäuse eine Einleitungsöffnung zum Einleiten von Luft in das Außengehäuse sowie eine Ausleitungsöffnung zum Ausleiten von Luft aus dem Außengehäuse aufweist, und das gewährleistet, dass das Innengehäuse äußerlich von Luft umströmt ist.

13. Heizgerät, **dadurch gekennzeichnet, dass** es eine Wärmerückgewinnungseinheit (10) nach einem der vorhergehenden Ansprüche enthält, wobei die Wärmerückgewinnungseinheit (10) auf dem oberen Bereich des Heizgerätes angeordnet oder im Heizgerät integriert ist.

14. Heizgerät nach Anspruch 13, **dadurch gekennzeichnet,**
**dass** das Heizgerät einen Brenner mit einer Eintrittsöffnung und einer Austrittsöffnung umfasst,
**dass** die Ausleitungsöffnung des Außengehäuses mit der Eintrittsöffnung des Brenners in Strömungsverbindung steht, und
**dass** die Austrittsöffnung des Brenners mit der Einleitungsöffnung des Innengehäuses in Strömungsverbindung steht.

15. Wärmerückgewinnungseinheit (10) nach einem der Ansprüche 8 bis 12, **dadurch gekennzeichnet, dass** die Platten des Wärmetauschers (20) jeweils einen außen umlaufenden Randbereich umfassen, wobei der Randbereich zumindest einiger Platten mindestens zwei aufwärts gebogene Teilbereiche aufweist, die dem sicheren Stapeln und Ausrichten der Platten zueinander dienen. (hier weglassen, weil uneinheitlich?)
